# EUROPEAN PATENT APPLICATION

(11) **EP 3 130 948 A1**
(43) Date of publication of application: **15.02.2017**
(21) Application number: 15776940.7
(22) Date of filing: 07.04.2015
(51) Int. Cl.: G02B 6/02, G02B 5/18, G02B 6/10

(54) **GRATING MANUFACTURING DEVICE AND GRATING MANUFACTURING METHOD**

(30) Priority: 09.04.2014 JP 2014080174
(71) Applicant: Sumitomo Electric Industries, Ltd., Osaka-shi, Osaka 541-0041 (JP)
(72) Inventor: NAGANO, Shigehiro, Yokohama-shi Kanagawa 244-8588 (JP)
(74) Representative: Hoffmann Eitle
(86) International application number: PCT/JP2015/060835
(87) International publication number: WO 2015/156281

(57) **Abstract**

Provided are an apparatus for manufacturing a grating and a method for manufacturing a grating with which a grating having a desired attenuate wavelength characteristic can be easily manufactured. The apparatus, which forms a grating in an optical fiber as an optical waveguide, includes a laser source, beam diameter adjusting means, a scanning mirror, mirror position adjusting means, a cylindrical lens, lens position adjusting means, a phase mask, mask position adjusting means, a stage, a fixing jig, and a synchronous controller. The synchronous controller controls an adjustment of a position of the scanning mirror performed by the mirror position adjusting means and an adjustment of a position of the phase mask performed by the mask position adjusting means in a manner in which they are associated with each other.

## Description

### Technical Field

The present invention relates to an apparatus for writing a grating in an optical waveguide and a method for writing a grating in an optical waveguide.

### Background Art

By irradiating an optical waveguide of an optical fiber or the like having the core or a clad formed of silica glass containing photosensitive materials such as GeO₂ and B₂O₃ with ultraviolet light which has been intensity modulated in an axial direction of the core, a grating having a distribution of refractive index corresponding to a distribution of the intensity of the ultraviolet light in the axial direction of the core can be manufactured. Such a grating can be used as, for example, a gain equalizer that equalizes a gain of an erbium-doped fiber amplifier (EDFA) including an amplifying optical fiber that contains erbium (Er) in its core.

Techniques for manufacturing a grating are descried in JP 2003-4926A (PTL 1), WO2003/093887 (PTL 2), JP 10-253842A (PTL 3), JP 2001-166159A (PTL 4), and JP 2004-170476A (PTL 5). Examples of the ultraviolet light include a second harmonic of an argon ion laser light (244 nm), a KrF excimer laser light (248 nm), a fourth harmonic of a YAG laser light (265 nm), a second harmonic of a copper vapor laser light (255 nm), and so forth.

Examples of a method for irradiating the optical waveguide with the ultraviolet light which has been intensity modulated in the axial direction of the core include a phase mask method, a method in which the optical waveguide is directly exposed to the laser light, and a dual-beam interference exposure method. With the phase mask method, positive/negative first-order diffracted beams generated by using a chirp-type grating phase mask are caused to interfere with each other. With the dual-beam interference exposure method, the laser light is divided into two beams and these divided beams are caused to interfere with each other. With the phase mask method, compared to other methods, the grating can be easily manufactured with good repeatability.

With the technique for manufacturing a grating disclosed in PTL 3 and PTL 4, after the grating has been formed in the optical waveguide with the phase mask method, the phase mask is replaced with a dimmer filter having a distribution of transmittance in the axial direction of the optical waveguide, and the optical waveguide is irradiated with non-interference light having passed through the dimmer filter. Thus, the effective refractive index is caused to vary in the axial direction of the optical waveguide so as to manufacture the grating having a desired attenuation wavelength characteristic. With this technique for manufacturing a grating, the step of adjusting the effective refractive index by irradiation with the non-interference light is required in addition to the step of forming the grating by using the phase mask. Consequently, there is a problem in that a manufacturing cost and manufacturing time are increased.

PTL 5 describes that, in the phase mask method, an amplitude of refractive index modulation of the grating can be adjusted by adjusting the distance between the phase mask and the optical waveguide. PTL 5 also describes that, as the distance between the phase mask and the optical waveguide is reduced, the amplitude of the refractive index modulation of the grating can be increased, and as the distance between the phase mask and the optical waveguide is increased, the amplitude of the refractive index modulation of the grating can be reduced. However, according to calculation, conducted by the inventor, of the behavior of the positive/negative first-order diffracted beams with respect to the distance between the phase mask and the optical waveguide, the increase in the distance between the phase mask and the optical waveguide is not necessarily able to reduce the amplitude of the refractive index modulation of the grating, and the behavior of the diffracted beams are complex. Furthermore, only by adjusting the distance between the phase mask and the optical waveguide, versatility in forming the grating is low, and it is difficult to realize a characteristic specific to the optical waveguide and variation in the longitudinal direction.

### Summary of Invention

### Technical Problem

Accordingly, an object of the present invention is to provide an apparatus for manufacturing a grating and a method for manufacturing a grating with which a grating having a desired attenuate wavelength characteristic can be easily manufactured. Solution to Problem

An apparatus for manufacturing a grating writes a grating in an optical waveguide. The apparatus includes a laser source, mirror position adjusting means, mask position adjusting means, and a synchronous controller. The laser source outputs laser light. The mirror position adjusting means is movable in an axial direction of the optical waveguide and adjusts a position of a scanning mirror, which deflects the laser light to the optical waveguide, so as to adjust a grating write position in the optical waveguide. The mask position adjusting means adjusts a position of a phase mask, which is disposed between the scanning mirror and the optical waveguide, so as to adjust a distance between the phase mask and the optical waveguide. The synchronous controller controls an adjustment of the position of the scanning mirror performed by the mirror position adjusting means and an adjustment of the position of the phase mask performed by the mask position adjusting means in a manner in which they are associated with each other.

The apparatus may further include beam diameter adjusting means that is provided between the laser source and the scanning mirror and that adjusts a beam diameter and a wavefront of the laser light. In this case, the synchronous controller also associates and controls an adjustment of the beam diameter of the laser light performed by the beam diameter adjusting means. The apparatus may further include lens position adjusting means that adjusts a distance between the optical waveguide and a cylindrical lens which receives the laser light having been deflected by the scanning mirror. In this case, the synchronous controller also associates and controls an adjustment of a position of the cylindrical lens performed by the lens position adjusting means. A focal length of the cylindrical lens may be from 100 to 200 mm.

A method for manufacturing a grating, the method with which a grating is written in an optical waveguide, includes deflecting laser light having been output from a laser source to the optical waveguide by using a scanning mirror movable in an axial direction of the optical waveguide, irradiating the optical waveguide through a phase mask disposed between the scanning mirror and the optical waveguide with the laser light having been deflected by the scanning mirror, associating an adjustment of a position of the scanning mirror and an adjustment of a position of the phase mask with each other controls the adjustment of the position of the scanning mirror and the adjustment of the position of the phase mask, and writing the grating in the optical waveguide.

A radius of curvature of a wavefront of the laser light with which the phase mask is irradiated may be 20 mm or larger. The scanning mirror may be moved in the axial direction of the optical waveguide while a beam width of the laser light with which the phase mask is irradiated is varied from 500 to 3000 µm. A cylindrical lens which receives the laser light having been deflected by the scanning mirror may be used. A beam width of the laser light incident upon the cylindrical lens may be from 500 to 3000 µm.

### Advantageous Effects of Invention

According to the present invention, a grating having a desired attenuation wavelength characteristic can be easily manufactured.

### Brief Description of Drawings

Figure 1 is a conceptual view of an apparatus for manufacturing a fiber grating according to an embodiment of the present invention.
Figure 2 includes graphs illustrating a distribution in an axial direction of the intensity of light with which an optical fiber is irradiated with the distance from the phase mask set to 10 µm.
Figure 3 includes graphs illustrating a distribution in the axial direction of the intensity of the light with which the optical fiber is irradiated with the distance from the phase mask set to 50 µm.
Figure 4 includes graphs illustrating a distribution in the axial direction of the intensity of the light with which the optical fiber is irradiated with the distance from the phase mask set to 70 µm.
Figure 5 includes graphs illustrating a distribution in the axial direction of the intensity of the light with which the optical fiber is irradiated with the distance from the phase mask set to 90 µm.
Figure 6 includes graphs illustrating a distribution in the axial direction of the intensity of the light with which the optical fiber is irradiated with the distance from the phase mask set to 110 µm.
Figure 7 includes graphs illustrating a distribution in the axial direction of the intensity of the light with which the optical fiber is irradiated with the distance from the phase mask set to 130 µm.
Figure 8 is a conceptual view summarizing the distributions in the axial direction of the intensity of the light with which the optical fiber 2 is irradiated with the distance from the phase mask varied.
Figure 9 includes graphs illustrating variation in refractive index in the axial direction of the optical fiber.
Figure 10 is a graph illustrating the relationship between a distance Gap from the phase mask and the ratio between the area of bias light and the area of interference pattern with the diameter of an incident beam set to 100 µm.
Figure 11 is a graph illustrating the relationship between the distance Gap from the phase mask and the ratio between the area of the bias light and the area of the interference pattern with the diameter of the incident beam set to 150 µm.
Figure 12 is a graph illustrating the relationship between the distance Gap from the phase mask and the ratio between the area of the bias light and the area of the interference pattern with the diameter of the incident beam set to 200 µm.
Figure 13 is a graph illustrating the ratio between the area of the bias light and the area of the interference pattern.
Figure 14 is an enlarged view of Fig. 12.
Figure 15 is an enlarged view of Fig. 12.
Figure 16 is an enlarged view of Fig. 12.
Figure 17 is an enlarged view of Fig. 12.
Figure 18 is an enlarged view of Fig. 12.
Figure 19 is an enlarged view of Fig. 12.
Figure 20 is an enlarged view of Fig. 12.
Figure 21 is a conceptual view illustrating a state of the laser light condensed by a cylindrical lens.
Figure 22 is a conceptual view illustrating the distribution of the intensity of the laser light in the optical fiber.

### Description of Embodiments

An apparatus for manufacturing a grating and a method for manufacturing a grating according to the present invention are described in detail below with reference to the accompanying drawings. In description of the drawings, the same elements are denoted by the identical reference numerals, thereby omitting duplicate description. It should be noted that the present invention is not limited to these examples. The present invention is indicated by the scope of Claims and is intended to embrace all the modifications within the scope of Claims and within meaning and range of equivalency.

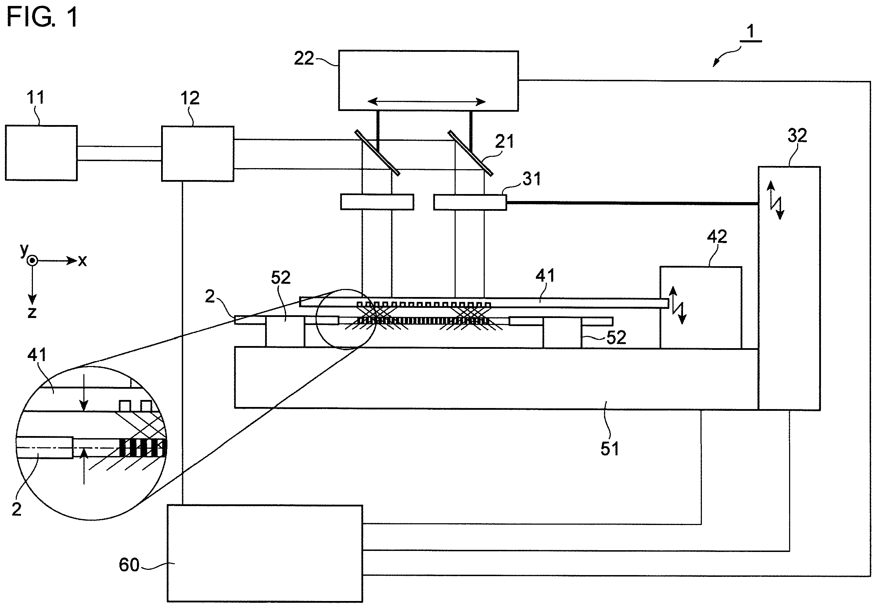

Fig. 1 is a conceptual view of an apparatus for manufacturing a fiber grating 1 according to an embodiment of the present invention. The apparatus for manufacturing a fiber grating 1 forms a grating in an optical fiber 2 which is an optical waveguide. The apparatus for manufacturing a fiber grating 1 includes a laser source 11, a beam diameter adjusting means 12, a scanning mirror 21, a scanning mirror position adjusting means (mirror position adjusting means) 22, a cylindrical lens 31, a cylindrical lens position adjusting means (lens position adjusting means) 32, a phase mask 41, a phase mask position adjusting means (mask position adjusting means) 42, a stage 51, a fixing jig 52, and a synchronous controller (controller) 60.

The laser source 11 outputs laser light of a wavelength at which the refractive index of a core of the optical fiber 2 can be varied (for example, 244 nm). The beam diameter adjusting means 12 adjusts the beam diameter and the wavefront of the laser light having been output from the laser source 11 and outputs the adjusted laser light. The scanning mirror 21 is movable in the axial direction of the optical fiber 2 and deflects the laser light having been output from the beam diameter adjusting means 12 toward the optical fiber 2. The mirror position adjusting means 22 adjusts the position of the scanning mirror 21 so as to adjust a grating write position in the optical fiber 2. The cylindrical lens 31 receives the laser light having been deflected by the scanning mirror 21 and causes the laser light to converge in the axial direction of the optical fiber 2. The lens position adjusting means 32 adjusts the distance between the cylindrical lens 31 and the optical fiber 2.

The phase mask 41 is disposed between the cylindrical lens 31 and the optical fiber 2. The phase mask 41 has a grating having projections and recesses with a period of about 1 µm on a surface facing the optical fiber 2. The phase mask 41 receives the laser light having been output from the cylindrical lens 31 so as to generate positive/negative first-order diffracted beams and causes these positive/negative first-order diffracted beams to interfere with one another in the core of the optical fiber 2, thereby forming a distribution of optical intensity so as to form a grating in the core of the optical fiber 2. The mask position adjusting means 42 adjusts the position of the phase mask 41 so as to adjust the distance between the phase mask 41 and the optical fiber 2. The optical fiber 2 is fixed onto the stage 51 by the fixing jig 52.

The synchronous controller 60 controls the adjustment of the position of the scanning mirror 21 performed by the mirror position adjusting means 22 and the adjustment of the position of the phase mask 41 performed by the mask position adjusting means 42 in a manner in which they are associated with each other. Preferably, the synchronous controller 60 also associates the adjustment of the beam diameter of the laser light performed by the beam diameter adjusting means 12 so as to control the adjustment of the beam diameter of the laser beam. Furthermore, preferably, the synchronous controller 60 also associates the adjustment of the position of the cylindrical lens 31 performed by the lens position adjusting means 32 so as to control the adjustment of the position of the cylindrical lens 31.

Preferably, the focal length of the cylindrical lens 31 is from 100 to 200 mm, the radius of curvature of the wavefront of the laser light with which the phase mask 41 is irradiated is 20 mm or larger, the scanning mirror 21 is moved in the axial direction of the optical fiber 2 while the beam width of the laser light with which the phase mask 41 is irradiated is varied from 500 to 3000 µm, and the beam width of the laser light incident upon the cylindrical lens 31 is from 500 to 3000 µm. Furthermore, the mirror position adjusting means 22, the lens position adjusting means 32, and the mask position adjusting means 42 preferably include, for example, a linear motor, a stepping motor, and a piezoelectric element, respectively.

For convenience of description, the xyz orthogonal coordinate system is indicated in Fig. 1. The x axis is parallel to the axial direction of the optical fiber 2. The z axis is parallel to the laser light which irradiates the optical fiber 2. The y axis is perpendicular to both the x axis and the z axis. The xyz orthogonal coordinate system is used in the following description.

The calculation results described below are calculated based on the assumption that the laser light incident upon the phase mask 41 has a Gaussian distribution and the beam diameter of the laser light is 200 µmφ. Furthermore, the calculation results described below may represent only one side of the center (the center of the Gaussian distribution) of an incident beam. An actual distribution is symmetric about the center of the incident beam.

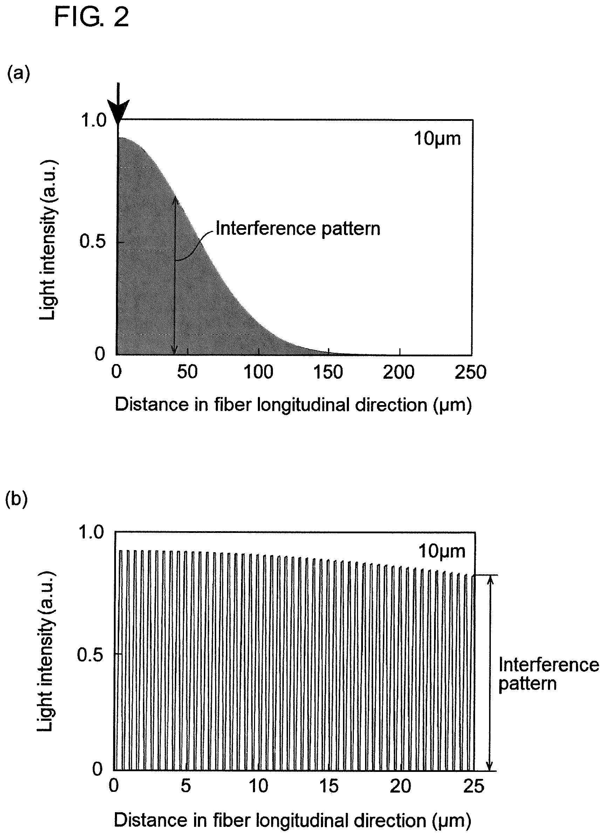

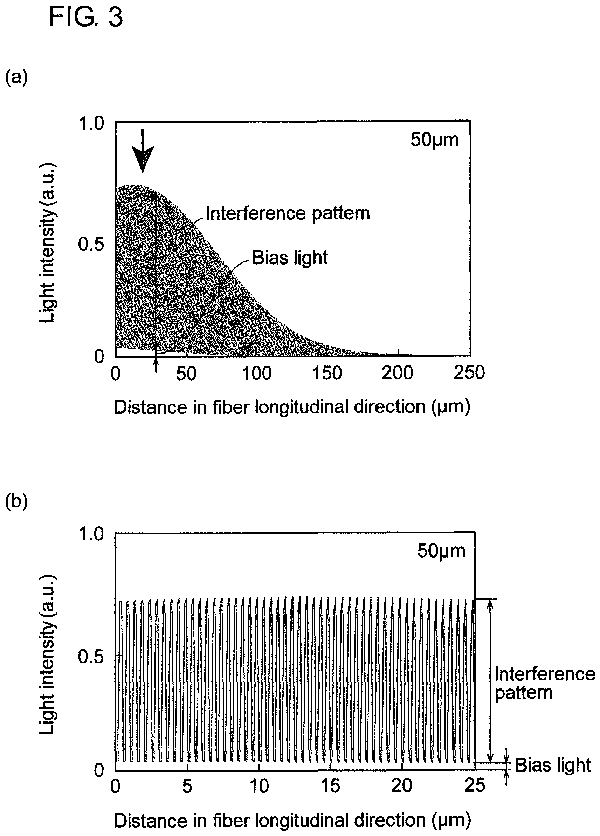

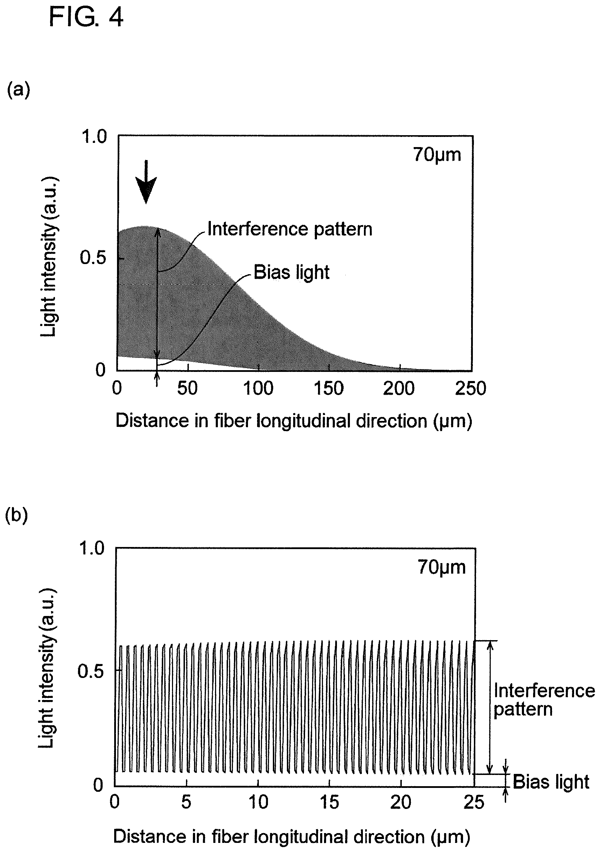

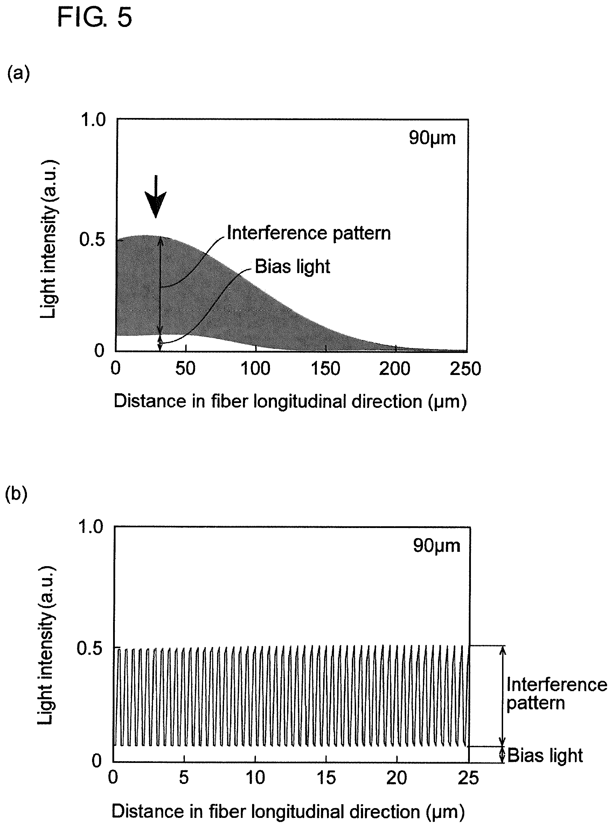

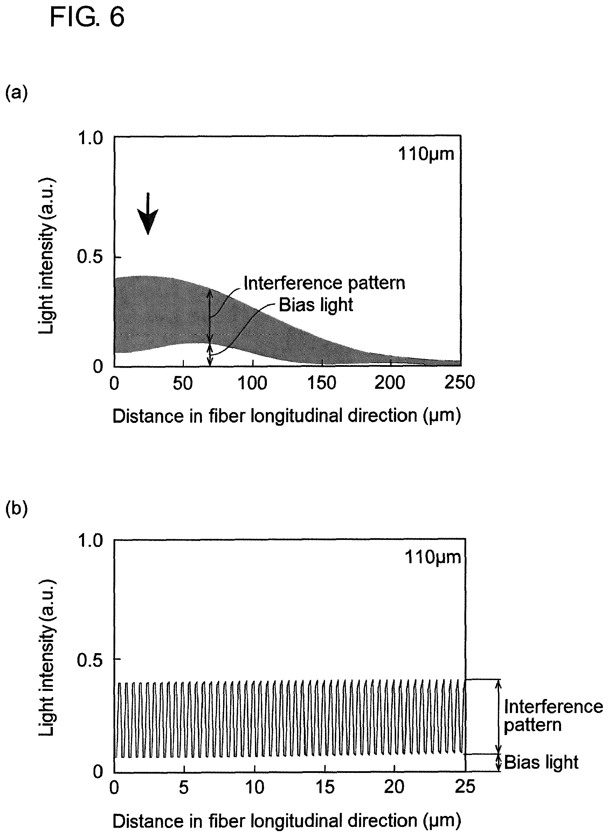

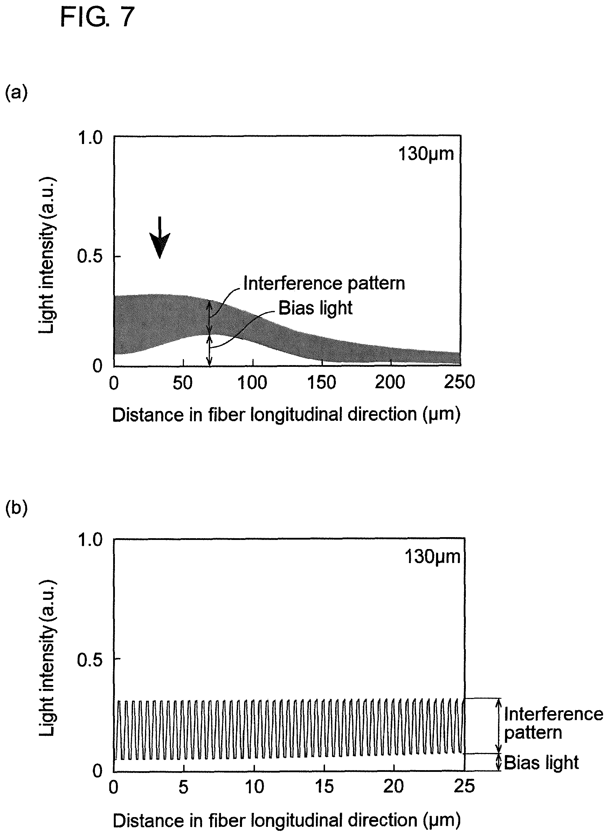

Figs. 2 to 7 are graphs illustrating distributions in the axial direction (x direction) of the intensity of the light with which the optical fiber 2 is irradiated with the distance (z direction) from the phase mask 41 varied. Fig. 2 illustrates the case where the distance is 10 µm, Fig. 3 illustrates the case where the distance is 50 µm, Fig. 4 illustrates the case where the distance is 70 µm, Fig. 5 illustrates the case where the distance is 90 µm, Fig. 6 illustrates the case where the distance is 110 µm, and Fig. 7 illustrates the case where the distance is 130 µm. The origin 0 in the axial direction of the optical fiber 2 represents the center of the Gaussian distribution of the laser light incident upon the phase mask 41. A peak position of the intensity of the interference light is indicated by an arrow in a section (a) in each of Figs. 2 to 7. Also in each of Figs. 2 to 7, a section (b) is an enlarged view of part of the corresponding section (a), illustrating that the period of interference pattern is about 0.5 µm.

As can be seen from these drawings, as the distance from the phase mask 41 is increased, the peak position of the interference light intensity is separated from the origin. At a position separated by the distance of any value, variation in refractive index due to bias light and the variation in refractive index due to the interference pattern are superposed on one another. The bias light may cause degradation of the visibility of the interference pattern. Furthermore, as the distance from the phase mask 41 is increased, the ratio of the bias light increases. In addition, it has been found that, as the distance is further increased, the interference light is outgoing at an angle of about 14 degrees while the peak of the interference light intensity grows.

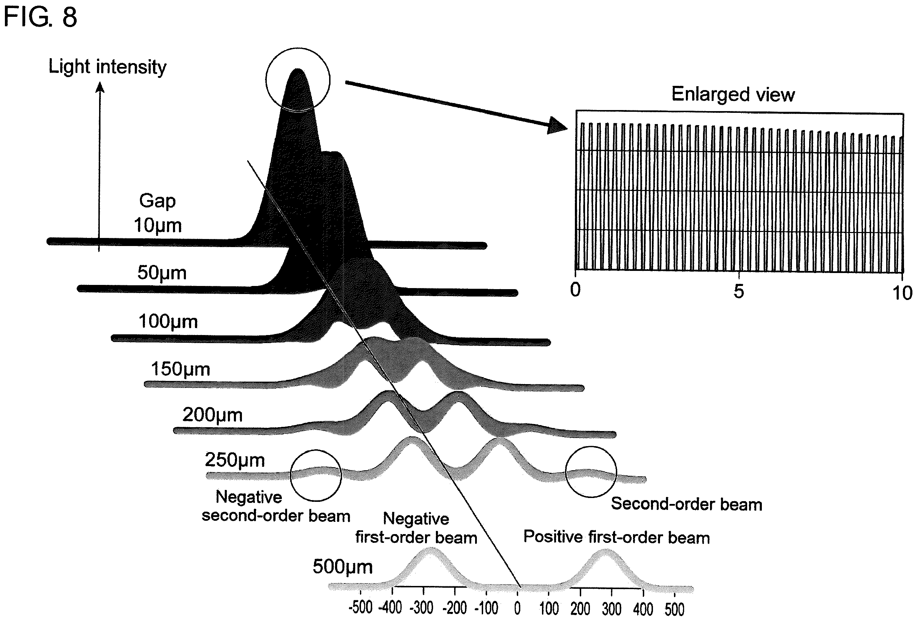

Fig. 8 is a conceptual view summarizing the distributions in the axial direction (x direction) of the intensity of the light with which the optical fiber 2 is irradiated with the distance (z direction) from the phase mask 41 varied. Here, the distance is set to 10 µm, 50 µm, 100 µm, 150 µm, 200 µm, 250 µm, or 500 µm. As the distance from the phase mask 41 is increased, the peak of the interference light grows into positive/negative first-order diffracted beams and the peak position of the interference light is separated from the origin. Meanwhile, as the distance from the phase mask 41 is increased, the ratio of a interference light region reduces and the ratio of the bias light increases. Furthermore, it can be seen that the outgoing angle of the interference light is about 14 degrees from the peak position of the interference light at a distance of 500 µm. This coincides with a calculation result of a far field pattern of the phase mask 41.

In this calculation, the grating period of the phase mask 41 is set so that the period of the interference pattern is about 0.5 µm. As can be seen from Figs. 2 to 7, the ratio between the interference light and the bias light can be adjusted by adjusting the distance between the phase mask 41 and the optical fiber 2. Here, the distance between the phase mask 41 and the optical fiber 2 is the distance between a principal surface of the phase mask 41 where the grating is formed and the axis of the optical fiber 2.

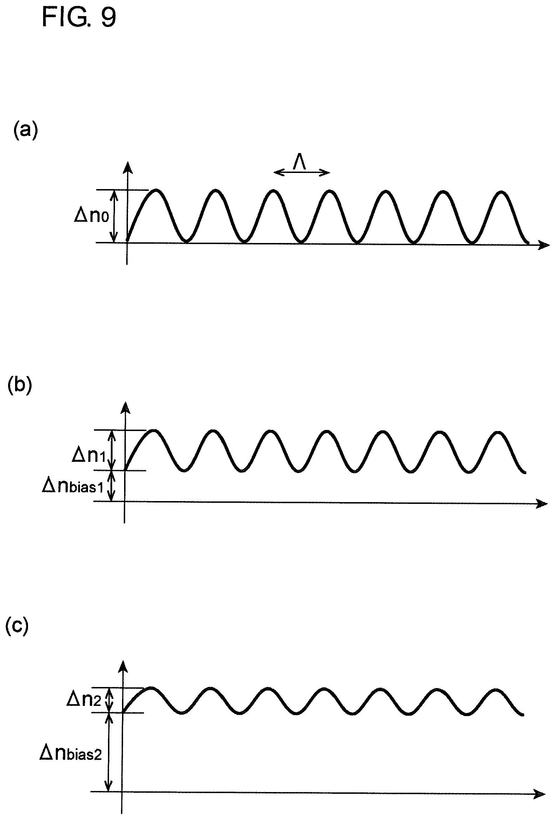

Fig. 9 includes graphs illustrating variation in refractive index in the axial direction of the optical fiber 2. The ratio between an amplitude Δn of refractive index modulation and a bias Δn_{bias} corresponds to the ratio between the interference light and the bias light. That is, the ratio between the amplitude Δn of the refractive index modulation and the bias Δn_{bias} corresponds to the distance between the phase mask 41 and the optical fiber 2. That is, instead of the forming of a grating by the phase mask method and adjustment of the effective refractive index using irradiation with non-interference light disclosed in PTL 3 and PTL 4, the ratio between the interference light and the bias light in positions in the axial direction of the optical fiber 2 can be appropriately set by moving the scanning mirror 21 in the axial direction while adjusting the distance between the phase mask 41 and the optical fiber 2 according to the present embodiment. Thus, a grating having a desired attenuation wavelength characteristic can be easily manufactured by using a chirp-type grating phase mask and by writing the grating in the optical waveguide while controlling the adjustment of the position of the scanning mirror that determines the period of the interference pattern and the distance between the phase mask and the optical fiber that determines the ratio between the interference light and the bias light in a manner in which they are associated with each other.

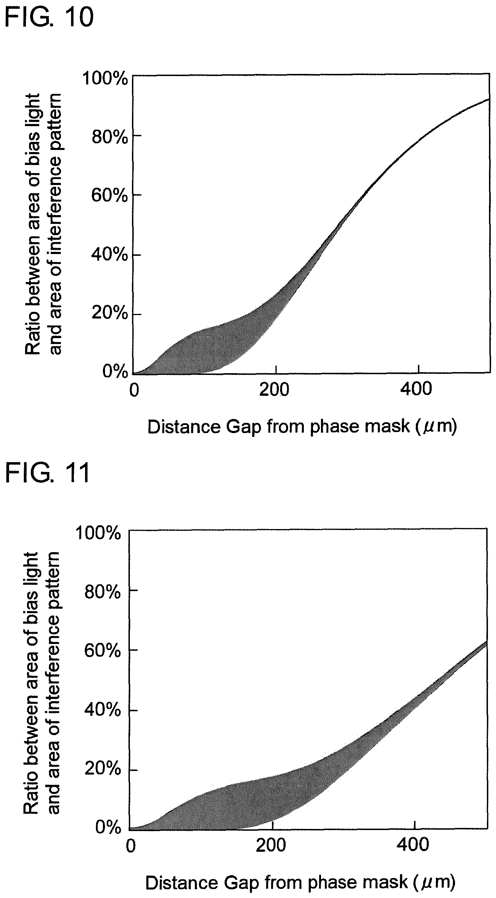

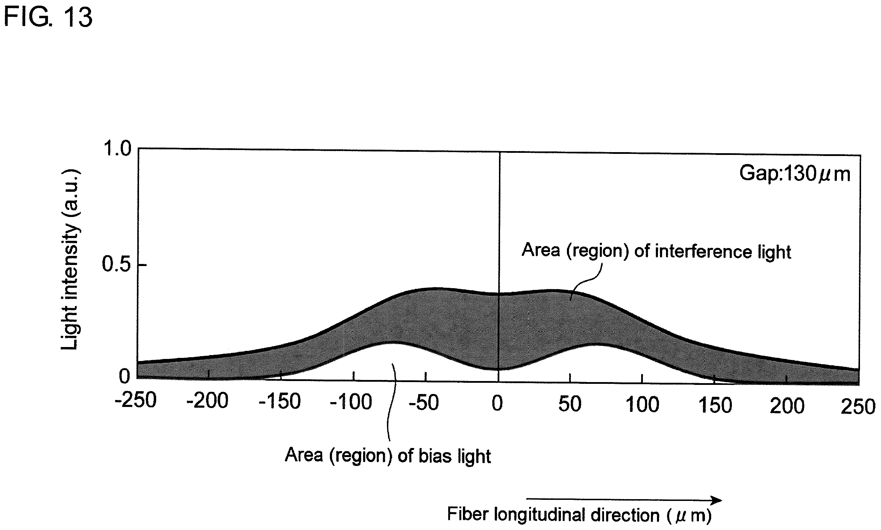

Figs. 10 to 12 are graphs illustrating the relationship between a distance Gap from the phase mask 41 and the ratio between the area of the bias light and the area of the interference pattern when the diameter of the incident beam is set to different values as follows: 100 µm, 150 µm, and 200 µm. Fig. 13 is a graph illustrating the ratio between the area of the bias light and the area of the interference pattern. In Fig. 13, the distribution of the light intensity on the negative side of the distance in the fiber longitudinal direction is also illustrated in accordance with the Fig. 7 (a). As illustrated in Fig. 13, the area of the bias light and the area of the interference pattern can be obtained as areas in the fiber longitudinal direction (the interval of the integration is -1000 to +1000 µm). When the area of the bias light is 0%, this means that there is the interference pattern only, and when the area of the bias light is 100%, there is the bias light only.

As can be seen from these graphs, as the width of the incident beam is increased, rise of the ratio between the area of the bias light and the area of the interference pattern with respect to the distance Gap from the phase mask 41 is delayed and the degree of the inclination of the rise is reduced. For convenience of a calculation area, the calculation herein is limited to a range up to an incident beam width of 200 µm here. However, it is inferred that the degree of the inclination of the rise of the ratio between the area of the bias light and the area of the interference pattern is further reduced by further increasing the incident beam width. That is, as the incident beam width is increased, the ratio between the area of the bias light and the area of the interference pattern becomes less sensitive to the variation in Gap. This is advantageous for writing the grating.

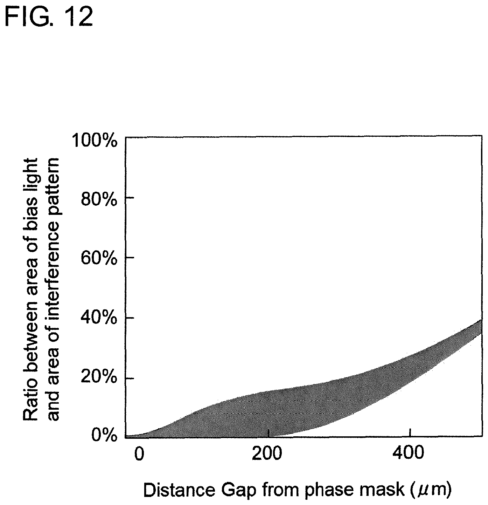

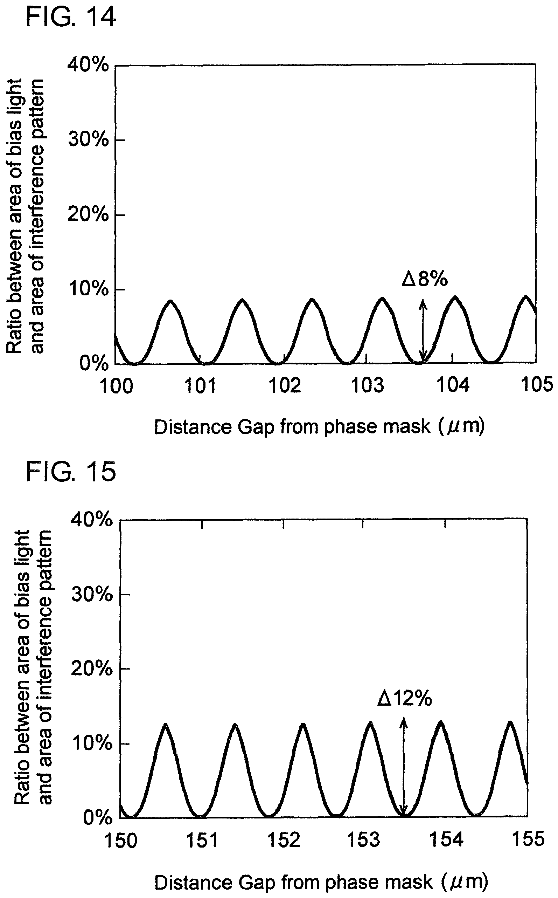

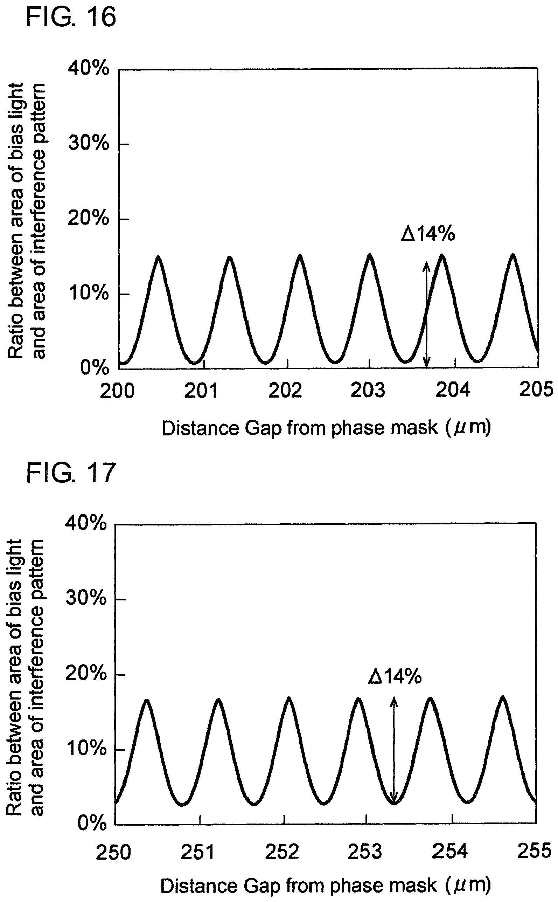

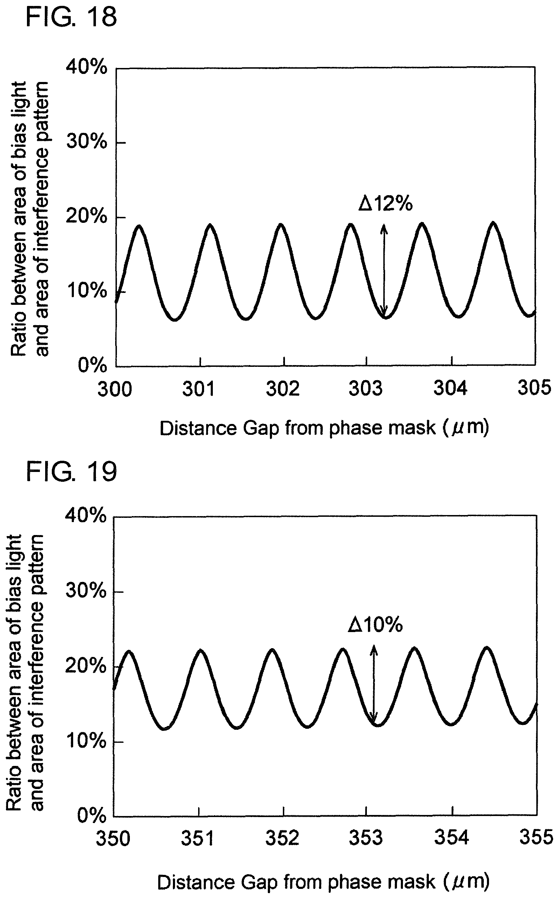

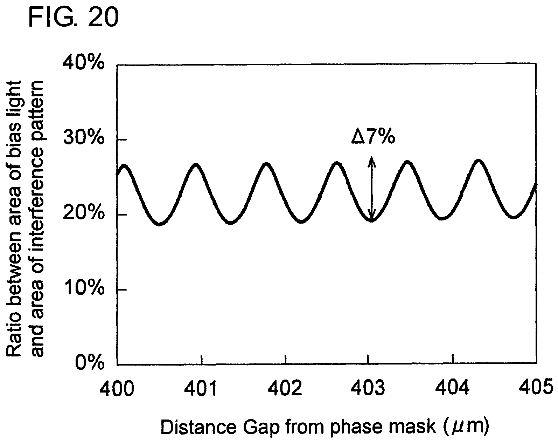

Figs. 14 to 20 are enlarged views of Fig. 12 (incident beam diameter is 200 µm), illustrating ranges of the distance Gap from the phase mask 41, respectively, as follows: 100 to 105 µm, 150 to 155 µm, 200 to 205 µm, 250 to 255 µm, 300 to 305 µm, 350 to 355 µm, and 400 to 405 µm.

As can be seen from these graphs, the ratio between the area of the bias light and the area of the interference pattern oscillates with a period of about 1 µm, and a variation width Δ is small, that is, from 7 to 8%, around 0 µm in Gap and when the Gap is large. The variation width Δ when the diameter of the incident beam is 200 µm has a similar shape (the ratio is 0 to 3% on a small side of the oscillation and Δ is 12 to 14%) around 150 µm in Gap to around 250 µm in Gap. Thus, a change with respect to the variation in Gap is small. That is, disturbance in the oscillation due to stage scanning in writing the grating can be absorbed in this range. This is advantageous for writing the grating. Although the degree of the variation width Δ is similar around 300 µm in Gap, tendency of the intensity of the bias light is significantly observed in this region. Thus, this is not advantageous for writing the grating.

As can be clearly understood from the above-described calculation results, the variation width of the ratio between the area of the bias light and the area of the interference pattern and the Gap length where the variation width is suppressed are uniquely determined along the Gap axis depending on the diameter of the incident beam.

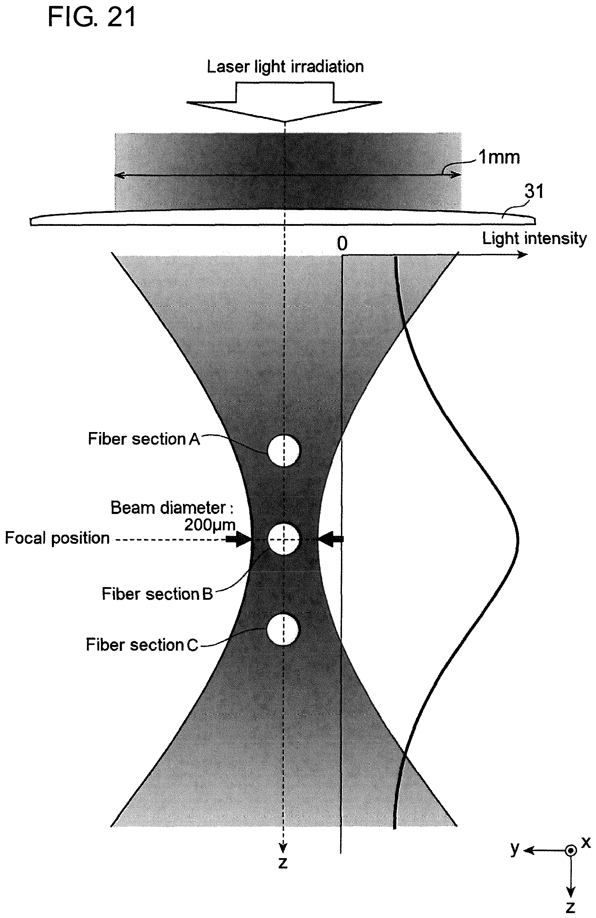

Fig. 21 is a conceptual view illustrating a state of the laser light condensed by the cylindrical lens 31. Here, it is assumed that the beam diameter of the laser light incident upon the cylindrical lens 31 is 1 mm, the focal length of the cylindrical lens 31 is 130 mm, and the beam width of the laser light at the focal position of the cylindrical lens 31 is about 200 µm. In Fig. 21, the power density of the laser light output from the cylindrical lens 31 is represented in terms of density levels, and the distribution of the laser light intensity along the optical axis of the cylindrical lens 31 is also illustrated.

Also in Fig. 21, a fiber section A represents a section of the optical fiber 2 disposed further to the cylindrical lens 31 side (-z side) than the focal position. A fiber section B represents a section of the optical fiber 2 disposed at the focal position. A fiber section C represents a section of the optical fiber 2 disposed further to a far side (+z side) than the focal position.

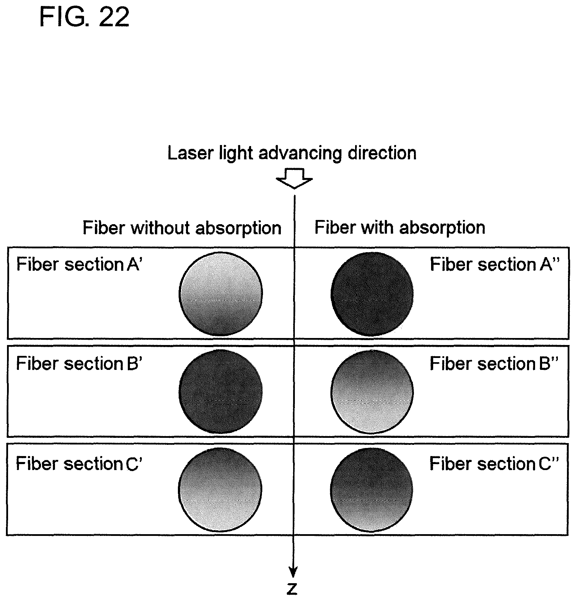

Fig. 22 is a conceptual view of the distributions of the laser light intensity in the optical fiber 2, illustrating the distributions of the laser light intensity in the fiber sections A to C of Fig. 21 when the light is not absorbed by the optical fiber 2 (A' to C') and when the light is absorbed by the optical fiber 2 (A" to C").

When the light is not absorbed by the optical fiber 2, the distributions of the laser light intensity in the fiber sections A' to C' are the same as those when the optical fiber 2 is not disposed. That is, in the fiber section A', the light power density is larger on the far side than on the phase mask side. In the fiber section B', the light power density on the far side and on the phase mask side are substantially the same. In the fiber section C', the light power density is smaller on the far side than on the phase mask side.

When the light is absorbed by the optical fiber 2, the distributions of the laser light intensity in the fiber sections A" to C" are determined in accordance with the light absorption by the optical fiber 2 in addition to the distributions of the laser light intensity without the optical fiber 2. That is, in the fiber section A", although the laser light attenuates due to the light absorption by the optical fiber 2 as the laser light advances to the far side, the optical power density is equalized due to a convergence effect produced by the cylindrical lens 31. In the fiber section B", since the laser light attenuates due to the light absorption by the optical fiber 2 as the laser light advances to the far side, and the laser light can be regarded as parallel light around this position, the optical power density is smaller on the far side than on the phase mask side. In the fiber section C", since the laser light attenuates due to the light absorption by the optical fiber 2 as the laser light advances to the far side, and the laser light is divergent around this position, the optical power density is smaller on the far side than on the phase mask side, and the difference in the optical power density between the far side and the phase mask side increases.

According to the present embodiment, the adjustment of the position of the scanning mirror 21 and the adjustment of the position of the phase mask 41 are associated with each other so as to control the adjustment of the position of the scanning mirror 21 and the adjustment of the position of the phase mask 41. Thus, the ratio between the interference light and the bias light can be appropriately set at positions in the axial direction of the optical fiber 2. Accordingly, a grating having a desired attenuation wavelength characteristic can be easily manufactured. Furthermore, according to the present embodiment, in addition to the adjustment of the position of the scanning mirror 21 and the adjustment of the position of the phase mask 41, the adjustment of the beam diameter of the laser light is also associated so as to control the adjustment of the beam diameter of the laser light. Furthermore, the adjustment of the position of the cylindrical lens 31 is also associated so as to control the adjustment of the position of the cylindrical lens 31. This can increase versatility of writing of the grating corresponding to the size of a photosensitive region and the magnitude of the photosensitivity specific to an optical fiber.

## Claims

1. An apparatus for manufacturing a grating that writes a grating in an optical waveguide, the apparatus comprising:
a laser source that outputs laser light;
mirror position adjusting means that is movable in an axial direction of the optical waveguide and that adjusts a position of a scanning mirror, which deflects the laser light to the optical waveguide, so as to adjust a grating write position in the optical waveguide;
mask position adjusting means that adjusts a position of a phase mask, which is disposed between the scanning mirror and the optical waveguide, so as to adjust a distance between the phase mask and the optical waveguide; and
a synchronous controller that controls an adjustment of the position of the scanning mirror performed by the mirror position adjusting means and an adjustment of the position of the phase mask performed by the mask position adjusting means in a manner in which the adjustment of the position of the scanning mirror and the adjustment of the position of the phase mask are associated with each other.

2. The apparatus for manufacturing a grating according to Claim 1, further comprising:
beam diameter adjusting means that is provided between the laser source and the scanning mirror and adjusts a beam diameter and a wavefront of the laser light,
wherein the synchronous controller also associates and controls an adjustment of the beam diameter of the laser light performed by the beam diameter adjusting means.

3. The apparatus for manufacturing a grating according to Claim 1 or 2, further comprising:
lens position adjusting means that adjusts a distance between the optical waveguide and a cylindrical lens which receives the laser light having been deflected by the scanning mirror,
wherein the synchronous controller also associates and controls an adjustment of a position of the cylindrical lens performed by the lens position adjusting means.

4. The apparatus for manufacturing a grating according to Claim 3,
wherein a focal length of the cylindrical lens is from 100 to 200 mm.

5. A method for manufacturing a grating, the method with which a grating is written in an optical waveguide, the method comprising:
deflecting laser light having been output from a laser source to the optical waveguide by using a scanning mirror movable in an axial direction of the optical waveguide;
irradiating the optical waveguide through a phase mask disposed between the scanning mirror and the optical waveguide with the laser light having been deflected by the scanning mirror; and
associating an adjustment of a position of the scanning mirror and an adjustment of a position of the phase mask with each other and controlling the adjustment of the position of the scanning mirror and the adjustment of the position of the phase mask, and writing the grating in the optical waveguide.

6. The method according to Claim 5,
wherein a radius of curvature of a wavefront of the laser light with which the phase mask is irradiated is 20 mm or larger.

7. The method according to Claim 5 or 6,
wherein the scanning mirror is moved in the axial direction of the optical waveguide while a beam width of the laser light with which the phase mask is irradiated is varied from 500 to 3000 µm.

8. The method according to any one of Claims 5 to 7,
wherein a cylindrical lens which receives the laser light having been deflected by the scanning mirror is used, and
wherein a beam width of the laser light incident upon the cylindrical lens is from 500 to 3000 µm.
